# FASCICULE DE BREVET EUROPEEN

(11) **EP 3 878 259 B1**
(45) Date de publication et mention de la délivrance du brevet: **30.07.2025**
(21) Numéro de dépôt: 21162417.6
(22) Date de dépôt: 12.03.2021
(51) Int. Cl.: A01C 5/06, A01C 7/20

(54) **SEMOIR**
SÄMASCHINE
SOWING MACHINE

(30) Priorité: 13.03.2020 FR 2002501
(43) Date de publication de la demande: 15.09.2021
(73) Titulaire: Carbure Technologies SAS, 49490 Noyant-Villages (FR)
(72) Inventeur: DUMOULIN, Tom, 49400 SAUMUR (FR)
(74) Mandataire: Ipsilon

(56) Documents cités:
- EP-A1- 1 974 596
- FR-A1- 3 070 232
- US-A- 3 450 074
- US-A- 5 524 560
- US-A1- 2018 110 180

## Description

### Domaine technique

La présente invention concerne un semoir destiné à être fixé sur un engin agricole. Un tel semoir est destiné à disposer un composé, en particulier une graine ou un engrais, dans la terre. L'invention concerne aussi un procédé de semage mettant en œuvre un tel semoir.

### Art antérieur

On connait de FR 3 070 233 un semoir comportant une descente de semoir débouchant dans une fente formée dans le sol par un disque d'ouverture. Ce semoir comprend une roue de fermeture permettant le comblement de la fente dans laquelle a été déposé le composé.

Le réglage de la profondeur de la fente est un problème permanent. Cette profondeur doit en effet être adaptée à la nature du sol, ainsi qu'au composé à semer.

Par ailleurs, cette profondeur peut être modifiée localement, de manière incontrôlée, notamment lorsque le disque d'ouverture rencontre des végétaux jonchant le sol ou des cailloux. Les documents US 2018/110180 A1, EP 1 974 596 A1 et US 3 450 074 divulguent l'utilisation de systèmes basculants pour améliorer le contrôle de la pression sur le sol.

Il existe un besoin pour un nouveau semoir permettant de mieux contrôler la profondeur du disque d'ouverture, sans avoir à recourir à des moyens complexes et coûteux, même lorsque le disque d'ouverture rencontre des végétaux jonchant le sol, des cailloux ou des pierres.

Un objectif de l'invention est de répondre, au moins 2 partiellement, à ce besoin.

### Résumé de l'invention

L'invention propose un semoir selon la revendication 1.

Comme on le verra plus en détail dans la suite de la description, la bascule assure ainsi une interaction mécanique entre le disque d'ouverture et la roue de fermeture : si l'une de ces deux pièces se soulève, par exemple au passage d'une pierre, la réaction du sol sur l'autre pièce tend à la ramener vers le sol. Réciproquement, si le disque d'ouverture s'enfonce dans le sol, le poids de la roue de fermeture tend à l'en extraire, la bascule limitant ainsi cet enfoncement. Avantageusement, la bascule constitue en outre un dispositif simple et peu coûteux.

Enfin, la bascule garantit un maintien efficace de l'alignement du disque d'ouverture et de la roue de fermeture.

Un semoir selon l'invention peut également comporter une ou plusieurs des caractéristiques optionnelles suivantes :
- le moment de force, autour de l'axe B, du disque d'ouverture et/ou le moment de force, autour de l'axe B, de la roue de fermeture est/sont réglable(s) ;
- la bascule comporte une branche de disque d'ouverture et une branche de roue de fermeture, qui portent les pivots de disque d'ouverture et de roue de fermeture, respectivement, et sont montées à rotation sur l'embase autour du pivot de bascule ;
- la bascule est configurée de manière que
   - la distance entre
      - le pivot de bascule d'une part, et
      - le pivot de disque d'ouverture ou le pivot de roue de fermeture, respectivement, d'autre part, et/ou
   - l'angle, mesuré dans un plan longitudinal vertical, d'inclinaison par rapport à un plan horizontal, de la droite (BO) qui relie les axes B et O, et/ou de la droite (BF) qui relie les axes B et O,
   est/sont réglables ;
- la bascule comporte :
   - un trou oblong dans lequel le pivot de disque d'ouverture peut être fixé en différentes positions et/ou une pluralité de trous cylindriques dans chacun desquels le pivot de disque d'ouverture peut être fixé, et/ou
   - un trou oblong dans lequel le pivot de roue de fermeture peut être fixé en différentes positions et/ou une pluralité de trous cylindriques dans chacun desquels le pivot de roue de fermeture peut être fixé ;
- dans un plan longitudinal vertical,
   - l'angle d'inclinaison λ entre la droite qui relie les axes B et O et un plan horizontal, est supérieur à 30° et inférieur à 70°, et/ou
   - l'angle d'inclinaison δ entre la droite qui relie les axes B et F et un plan horizontal, est supérieur à 10° et inférieur à 50°, et/ou
   - la distance entre l'axe B et l'axe O est supérieure à 10 cm, et inférieure à 100 cm, à 80 cm, voire à 50 cm ou à 25 cm, et/ou
   - la distance entre l'axe B et l'axe F est supérieure à 25 cm et inférieure à 100 cm, à 80 cm, voire à 60 cm, voire à 40 cm, et/ou
   - la distance longitudinale entre l'axe B et l'axe O est supérieure à 5 cm et inférieure à 80 cm, voire à 50 cm, voire à 30 cm, et/ou
   - la distance longitudinale entre l'axe B et l'axe F est supérieure à 15 cm, voire à 25 cm et inférieure à 100 cm, voire à 80 cm, voire à 50 cm, et/ou
   - la distance verticale entre l'axe B et l'axe O est supérieure à 10 cm et inférieure à 100 cm, voire à 50 cm, voire à 35 cm, voire à 25 cm, et/ou
   - la distance verticale entre l'axe B et l'axe F est supérieure à 10 cm et inférieure à 100 cm, voire à 50 cm, voire à 35 cm, voire à 25 cm ;
- dans un plan longitudinal vertical, l'angle θ entre la droite (BO) qui relie les axes B et O et la droite (BF) qui relie les axes B et F est inférieur à 60°, de préférence inférieur à 30° ;
- le semoir comporte un verrou d'immobilisation de la bascule par rapport à l'embase ;
- le verrou d'immobilisation est réglable de manière à définir une pluralité, de préférence une infinité de positions dans lesquelles la bascule est bloquée en position par rapport à l'embase ;
- le verrou d'immobilisation comporte une vis qui, dans la position d'immobilisation de la bascule, est vissée de manière à fixer rigidement la bascule sur l'embase ;
- le semoir comporte une butée, de préférence réglable, disposée de manière à limiter le soulèvement du disque d'ouverture par rotation de la bascule ;
- la descente de semoir est fixée rigidement sur l'embase ;
- la masse du disque d'ouverture est supérieure à 50 g et/ inférieure à 50 Kg, et/ou la masse de la roue de fermeture est supérieure à 300 g et/ inférieure à 50 Kg ;
- le soc est fixé sur l'embase et non sur la bascule, la distance entre le soc et le bord périphérique du disque d'ouverture étant de préférence inférieure à 1 cm, de préférence inférieure à 5 mm ;
- la bascule présente la forme générale d'une pièce plate triangulaire, de préférence percée d'un évidement central ;
- la bascule présente la forme générale de deux pièces, de préférence plates, de préférence triangulaires et de préférence percées chacune d'un évidement central, s'étendant de préférence sensiblement verticalement, reliées entre elles par les pivots de disque d'ouverture, de roue de fermeture et de bascule ;
- le soc s'étend partiellement entre les deux pièces de la bascule ;
- le semoir comporte un unique disque d'ouverture ;
- le semoir comporte un limiteur de profondeur ;
- la roue de fermeture comporte deux roues crénelées coaxiales fixées entre elles, chaque roue crénelée comportant de préférence une pluralité de dents sur son pourtour, les dents de l'une des roues crénelées étant disposées de préférence en quinconce relativement aux dents de l'autre des roues crénelées ;
- le pivot du disque d'ouverture est fixé sur une fourche montée à rotation sur la bascule autour d'un axe de préférence sensiblement vertical.

### Brève description des figures

D'autres caractéristiques et avantages de l'invention apparaitront encore à la lecture de la description détaillée qui va suivre et à l'examen des planches de figures dans lesquelles :
[fig 1] représente schématiquement, vu de côté, un semoir selon un exemple de réalisation de l'invention ;
[fig 2] représente une vue en perspective du semoir de la figure 1, mais avec d'autres formes de trous 34 et 36 ;
[fig 3] représente schématiquement, vue de côté, une variante du semoir de la figure 1 ;
[fig 4] représente schématiquement, vue de côté, une variante du semoir de la figure 1 ;
[fig 5] représente schématiquement, en perspective, une variante du semoir de la figure 1 ;
[fig 6] représente schématiquement, en perspective, une variante du semoir de la figure 1 ;
[fig 7] représente schématiquement, vue de côté, une variante du semoir de la figure 1,
[fig 8] représente schématiquement, vue de côté, une variante du semoir de la figure 1,
[fig 9] représente schématiquement, vue de côté, une variante du semoir de la figure 1,
[fig 10] représente schématiquement, vue de côté, une variante du semoir de la figure 1,
[fig 11] représente schématiquement, en perspective, une variante du semoir de la figure 1, et
[fig 12] représente schématiquement et partiellement, en perspective, une variante du semoir de la figure 1.

### Définitions

La « position de service » est classiquement la position dans laquelle le semoir est tiré par un engin agricole, classiquement un tracteur, sur un sol sensiblement horizontal, de manière à semer des graines dans le sol. Le sol est considéré comme suffisamment ferme pour éviter l'enfoncement des pièces prévues pour y prendre appui comme une roue de fermeture ou un grattoir.

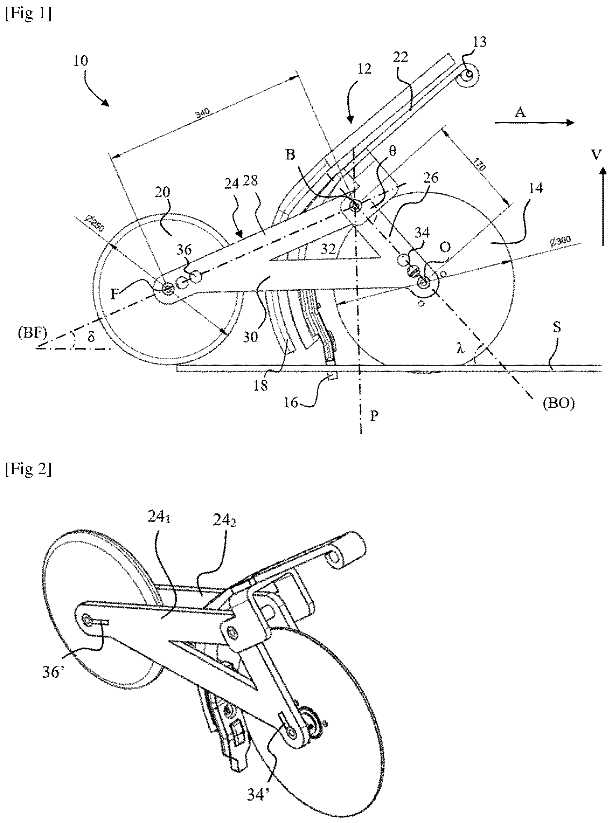

La direction d'avancement ou « direction longitudinale » est la direction orientée A (figure 1) selon laquelle le semoir est prévu pour être tracté dans la position de service.

Une distance ou une dimension « longitudinales » sont mesurées selon la direction d'avancement. Les longueurs sont mesurées selon la direction d'avancement.

Un plan longitudinal est un plan vertical parallèle à la direction d'avancement.

Le plan longitudinal médian est le plan longitudinal dans lequel le disque d'ouverture s'étend.

La flèche référencée « V » est verticale et pointe vers le haut.

Une distance ou une dimension « verticales » sont mesurées selon la direction verticale.

Un plan transversal est un plan perpendiculaire à la direction d'avancement A.

Une direction « transversale » T est une direction horizontale et dans un plan transversal. Les épaisseurs sont mesurées selon une direction transversale. Une distance ou une dimension « transversales » sont mesurées selon une direction transversale.

Dans la présente description, les adjectifs « inférieur », « supérieur », « horizontal », "vertical", « devant », « derrière », « avant », « arrière », « droite », « gauche » et « latéral » sont définis par rapport à la direction d'avancement (la flèche A pointe donc vers « l'avant »).

Une pièce est « fixée » sur une autre pièce lorsqu'elle est rigidement fixée sur cette dernière ou que les déplacements possibles sont guidés. La fixation peut être directe ou par l'intermédiaire d'une ou plusieurs autres pièces, par exemple par l'intermédiaire d'un adaptateur.

Le diamètre équivalent d'une section ou d'une ouverture est le diamètre d'un disque présentant la même aire que ladite section ou ouverture.

Il faut interpréter les verbes "comprendre " ou "comporter " ou "présenter " de manière non restrictive, sauf indication contraire.

### Description détaillée

Comme représenté sur la figure 1, dans un mode de réalisation préféré, un semoir 10 selon l'invention comporte un support 12 destiné à être fixé sur une poutre transversale 13 et sur lequel sont successivement montés, depuis l'avant vers l'arrière, un disque d'ouverture 14, un soc 16, une descente de semoir 18, et une roue de fermeture 20.

De préférence, le disque d'ouverture 14, le soc 16, la descente de semoir 18 et la roue de fermeture 20 s'étendent sensiblement dans un plan commun, de préférence vertical.

Classiquement, le disque d'ouverture 20 est destiné, en position de service et quand le semoir est tracté selon la direction d'avancement, à former une fente dans le sol S. Le soc 16 est destiné à bien dégager la terre devant la descente de semoir 18, et de préférence à élargir la fente. La descente de semoir 18 est destinée à guider un composé, classiquement des graines, jusqu'au fond de la fente. Dans un mode de réalisation, elle est introduite dans la fente de manière à déboucher à proximité du fond de la fente. La roue de fermeture 20 est destinée à rouler sur la fente, de manière à la refermer après que le composé y a été déposé.

De préférence, les différentes pièces du semoir comportent, voire sont constituées en un acier à haute limite élastique, ou « HLE », ou en inox. Ces pièces peuvent être renforcées localement avec du carbure de tungstène et/ou de la soudure anti-abrasion.

### Support

Le support 12 est la structure qui permet de solidariser à la poutre 13 le disque d'ouverture 14, le soc 16, la descente de semoir 18 et la roue de fermeture 20.

Le support comporte une embase 22 et une bascule 24.

L'embase 22 comporte, classiquement, un étançon 21 avec, à une extrémité supérieure, une attache de fixation à la poutre 13. La poutre 13 comporte classiquement des moyens de fixation, non représentés, à un engin agricole, classiquement à un tracteur.

À son extrémité inférieure, l'embase 22 porte le soc 16 et la descente de semoir 18. Le soc 16 et la descente de semoir 18 sont classiquement rigidement fixés sur l'étançon.

La bascule 24 est montée à rotation sur l'embase 22 autour d'un pivot de bascule d'axe B s'étendant dans un plan transversal, de préférence horizontal.

La bascule 24, de préférence monobloc, comporte une branche de disque d'ouverture 26 et une branche de roue de fermeture 28, qui portent respectivement, de préférence à leurs extrémités inférieures respectives, les pivots de disque d'ouverture et de roue de fermeture, d'axes O et F, respectivement, sur lesquels le disque d'ouverture 14 et la roue de fermeture 20 sont montés à rotation, de préférence à rotation libre. L'axe B de rotation de la bascule 24 sur l'embase 22 passe de préférence dans la région de jonction des deux branches 26 et 28.

Selon l'invention, les pivots du disque d'ouverture et de la roue de fermeture 20 sont séparés par le plan transversal P dans lequel s'étend l'axe B.

De préférence, les axes B, O et F sont parallèles, de préférence horizontaux.

Les axes O et F sont de préférence dans des plans transversaux respectifs, et sont de préférence horizontaux.

La bascule 24 comporte encore, de préférence, une branche de rigidification 30 connectant entre elles les extrémités inférieures des branches de disque d'ouverture et de roue de fermeture. La bascule 24 présente ainsi à la forme générale d'une équerre. L'évidement central 32 entre les trois branches limite avantageusement le poids de la bascule 24.

Dans un mode de réalisation préféré, comme représenté sur la figure 2, la bascule 24 comporte deux plaques 24₁ et 24₂, de préférence sensiblement de même forme, de préférence de forme triangulaire, de préférence chacune avec un évidement central 32, qui, dans la position de service, s'étendent sensiblement verticalement de chaque côté du plan longitudinal médian, et qui sont reliées entre elles par les pivots de disque d'ouverture, de roue de fermeture et de bascule. Les pivots de disque d'ouverture, de roue de fermeture et de bascule assurent ainsi une fonction d'entretoise. Cette conception simple confère une grande robustesse au semoir.

De préférence, l'embase 22 traverse l'espace entre ces deux plaques.

De préférence, le pivot de bascule traverse l'embase 22 et sert d'entretoise entre les plaques 24₁ et 24₂.

De préférence, dans un plan longitudinal vertical, comme représenté sur la figure 1 par exemple,
- l'angle d'inclinaison λ entre la droite (BO) qui relie les axes B et O et un plan horizontal, est supérieur à 30° ou 40° et/ou inférieur à 70° ou 60°, et/ou
- l'angle d'inclinaison δ entre la droite (BF) qui relie les axes B et F et un plan horizontal, est supérieur à 10° ou 20°et/ou inférieur à 50° ou 40°, et/ou
- la distance entre l'axe B et l'axe O est de préférence supérieure à 10 cm, de préférence supérieure à 15 cm et/ou inférieure à 25 cm, de préférence inférieure à 20 cm, une distance de 17 cm étend préférée entre toutes, et/ou
- la distance entre l'axe B et l'axe F est de préférence supérieure à 25 cm, de préférence supérieure à 30 cm et/ou inférieure à 40 cm, de préférence inférieure à 35 cm, une distance de 34 cm étend préférée entre toutes, et/ou
- la distance longitudinale entre l'axe B et l'axe O, ou « bras de levier d'ouverture », est de préférence supérieure à 5 cm, de préférence supérieure à 10 cm et/ou inférieure à 30 cm, de préférence inférieure à 25 cm, de préférence inférieure à 20 cm, et/ou
- la distance longitudinale entre l'axe B et l'axe F, ou « bras de levier de fermeture », est de préférence supérieure à 25 cm, de préférence supérieure à 30 cm et/ou inférieure à 50 cm, de préférence inférieure à 40 cm, de préférence inférieure à 35 cm, et/ou
- la distance verticale entre l'axe B et l'axe O est de préférence supérieure à 10 cm, de préférence supérieure à 15 cm et/ou inférieure à 25 cm, de préférence inférieure à 20 cm, et/ou
- la distance verticale entre l'axe B et l'axe F est de préférence supérieure à 10 cm, de préférence supérieure à 15 cm et/ou inférieure à 25 cm, de préférence inférieure à 20 cm ;
- la distance verticale entre l'axe O et l'axe F est de préférence inférieure à 10 cm, de préférence inférieure à 5 cm.

L'angle θ entre la droite (BO) qui relie les axes B et O et la droite (BF) qui relie les axes B et F peut être supérieur à 60°, supérieur à 70° et/ou inférieur à 100°.

L'angle θ est de préférence inférieur à 90° ou à 80°, à 70°, à 50°, à 30°, à 10°, voire sensiblement nul. Un tel angle permet de rapprocher le centre d'inertie de la bascule du pivot de bascule. Le déplacement latéral de la bascule et la rotation de la bascule autour d'un axe vertical, notamment sous l'effet d'une force transversale exercée sur le disque d'ouverture, sur le soc ou sur la roue de fermeture en sont avantageusement réduits. En service, l'alignement du disque d'ouverture, de la descente de semoir, du soc optionnel et de la roue de fermeture en est ainsi amélioré. L'opération de semage est avantageusement plus précise.

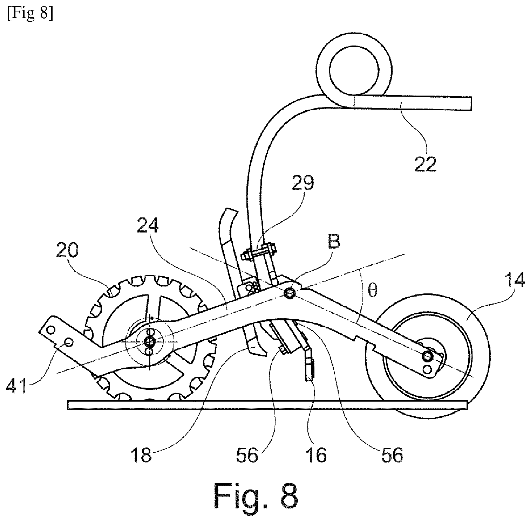

Comme illustré par exemple sur la figure 8, un angle θ supérieur à 10° ou à 20° ou à 30° peut être cependant utile pour éloigner le pivot de bascule du sol, et ainsi éviter une accumulation de végétaux.

La masse du disque d'ouverture 14 est de préférence supérieure 0,5 Kg, de préférence supérieure à 1 Kg, de préférence supérieure à 5 Kg, et/ou inférieure à 50 Kg, de préférence inférieure à 30 Kg, de préférence inférieure à 20 Kg, voire inférieure à 15 Kg.

La masse de la roue de fermeture 20 est de préférence supérieure à 0,3 Kg, de préférence supérieure à 1 Kg, de préférence supérieure à 5 Kg, et/ou inférieure à 50 Kg, de préférence inférieure à 30 Kg, de préférence inférieure à 20 Kg, voire inférieure à 15 Kg.

Dans un mode de réalisation,
- le moment de force, autour de l'axe B, de « l'ensemble d'ouverture » constitué par le disque d'ouverture 14 et par la partie de la bascule 24 qui s'étend, par rapport au plan P, du côté du disque d'ouverture et/ou
- le moment de force, autour de l'axe B, de « l'ensemble de fermeture » constitué par la roue de fermeture et par la partie de la bascule 24 qui s'étend, par rapport au plan P, du côté de la roue de fermeture
est/sont modifiables.

De préférence, le bras de levier d'ouverture et/ou le bras de levier de fermeture et/ou la masse de l'ensemble d'ouverture 14 et/ou la masse de l'ensemble de fermeture 20 est/sont modifiables.

De préférence, au moins une de la branche de disque d'ouverture 26 et de la branche de roue de fermeture 28 est conformée de manière que la distance au repos (c'est-à-dire alors que le semoir n'est pas tracté) entre le pivot de bascule d'une part et le pivot du disque d'ouverture et le pivot de roue de fermeture, respectivement, d'autre part soit réglable.

Par exemple, la branche de disque d'ouverture 26 peut présenter plusieurs trous 34, de préférence cylindriques, dans lesquels le pivot de disque d'ouverture peut être inséré, les trous 34 étant disposés de manière que la distance entre le pivot de bascule et le pivot de disque d'ouverture dépende du trou dans lequel le pivot de disque d'ouverture est inséré.

De même, la branche de roue de fermeture peut présenter plusieurs trous 36, de préférence cylindriques, dans lesquels le pivot de disque d'ouverture peut être inséré, les trous 36 étant disposés de manière que la distance entre le pivot de bascule et le pivot de roue de fermeture dépende du trou dans lequel le pivot de roue de fermeture est inséré.

D'autres solutions équivalentes, bien connues de l'homme du métier, sont envisageables.

Par exemple, la branche de disque d'ouverture 26 peut présenter un trou 34' allongé (figure 2) recevant le pivot de disque d'ouverture, et le long duquel le pivot de disque d'ouverture peut être bloqué en différentes positions, le trou 34' étant conformé de manière que la distance entre le pivot de bascule et le pivot de disque d'ouverture dépende de la position dans laquelle le pivot de disque d'ouverture est bloqué.

De même, la branche de roue de fermeture peut présenter un trou 36' allongé (figure 2) recevant le pivot de roue de fermeture, et le long duquel le pivot de roue de fermeture peut être bloqué en différentes positions, le trou 36' étant conformé de manière que la distance entre le pivot de bascule et le pivot de roue de fermeture dépende de la position dans laquelle le pivot de roue de fermeture est bloqué.

De préférence, la distance verticale entre l'axe B et l'axe O et/ou la distance verticale entre l'axe B et l'axe F sont modifiables.

L'homme du métier connaît également des solutions pour modifier l'angle entre les branches de disque d'ouverture et de roue de fermeture. En particulier, les deux branches peuvent être montées à rotation l'une sur l'autre, à la manière d'un compas, et pourvues d'un verrou adapté pour assurer leur immobilisation l'une par rapport à l'autre, dans la position angulaire souhaitée. Par exemple, les deux branches peuvent être immobilisées l'une par rapport à l'autre par pression d'une branche sur l'autre entre une tête de vis et un écrou vissé sur cette vis. Bien entendu, pour modifier l'angle entre les branches de disque d'ouverture et de roue de fermeture, la bascule ne doit pas comporter la branche de rigidification.30. Ces solutions peuvent être également mises en œuvre pour modifier l'angle d'inclinaison de la branche de disque d'ouverture ou de la branche de roue de fermeture par rapport à un plan horizontal.

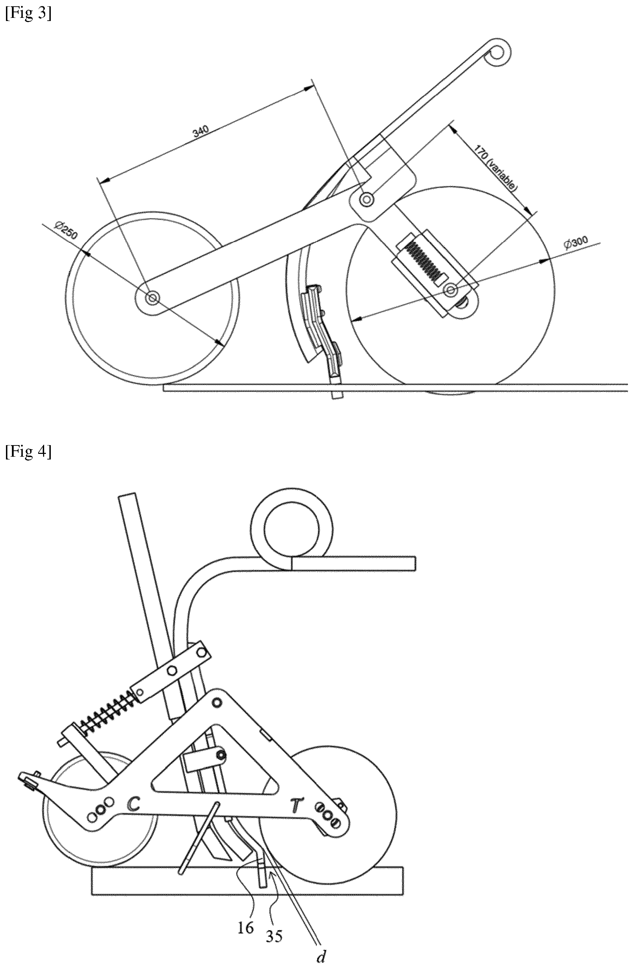

De préférence, comme représenté sur la figure 4, le support porte au moins un grattoir 37, configuré pour « frotter » sur le sol en position de service de manière à pousser de la terre dans la fente. Dans un mode de réalisation, le grattoir pénètre dans le sol de façon superficielle, c'est-à-dire sur une profondeur, mesurée selon une direction verticale, inférieure à 15 mm, de préférence inférieure à 10 mm, de préférence inférieure à 5 mm, de préférence inférieure à 1 mm.

De préférence, la distance transversale entre le plan longitudinal médian et le grattoir 37 est inférieure à 20 mm, de préférence à 10 mm, de préférence à 5 mm. Dans un mode de réalisation préféré, comme représenté sur la figure 4, cette distance est sensiblement nulle, c'est-à-dire que le grattoir vient en contact avec le bord de la fente. Le grattoir vient donc racler le bord de la fente.

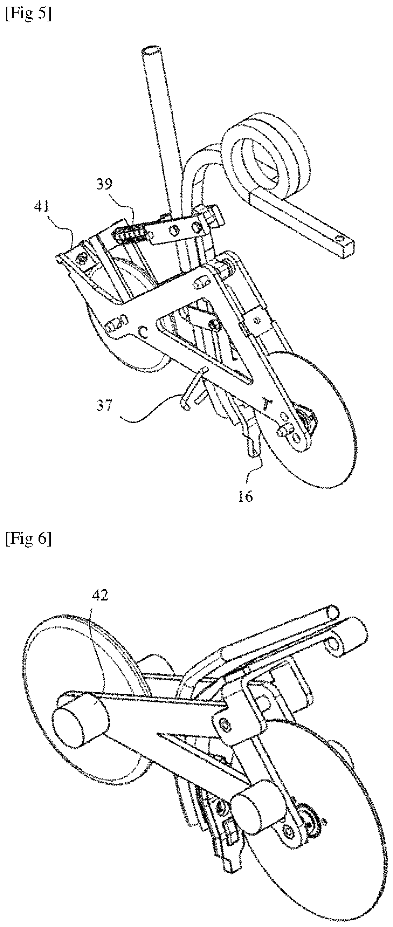

De préférence encore, le semoir comporte un nettoyeur 41, fixé sur le support de manière à enlever les dépôts de terre qui adhèrent à la roue de fermeture (figure 5) ou au disque ouvreur. Dans un mode de réalisation, le nettoyeur frotte sur la roue de fermeture ou le disque ouvreur, ou en est écarté d'une distance inférieure à 5 mm.

Le nettoyeur 41 peut être en acier. De préférence, dans les zones d'usure, il comporte du carbure de tungstène et/ou de la soudure anti-abrasion.

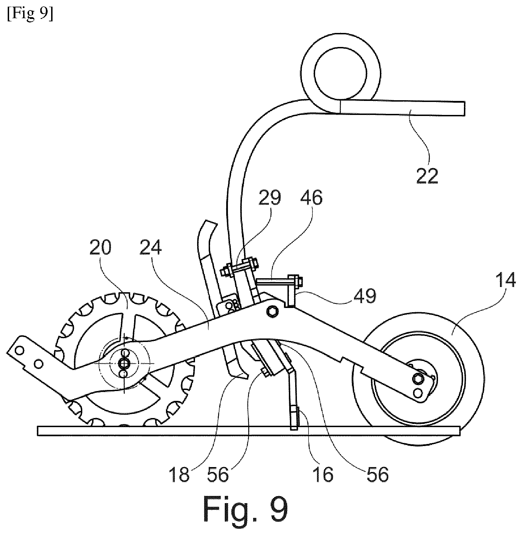

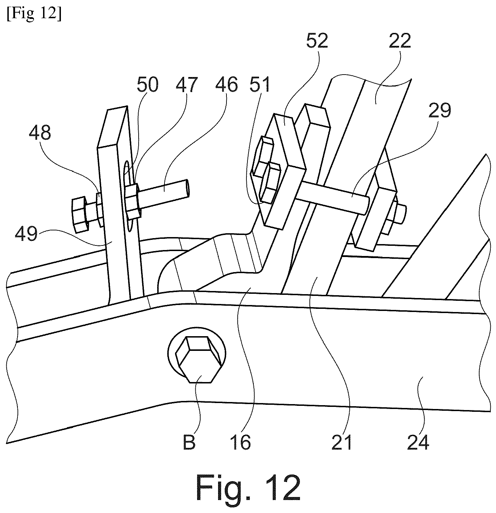

Dans un mode de réalisation particulièrement avantageux illustré sur les figures 9 et 12, le semoir comporte un organe permettant de rendre la bascule 24 fixe relativement à l'embase 22, dit « verrou d'immobilisation ». L'activation du verrou d'immobilisation de la bascule 24 permet avantageusement de modifier le fonctionnement du semoir, par exemple pour l'adapter à un sol jonché de pierres. Notamment dans cette situation, le verrou peut être activé et le disque d'ouverture 14 démonté. Le sol est alors fendu par le soc 16, qui, à la différence du disque d'ouverture, peut avantageusement efficacement écarter latéralement les pierres avec lesquelles il entre en contact.

Il est aussi possible de démonter la roue de fermeture 20.

Cette modularité permet d'adapter le semoir selon l'invention au terrain sur lequel il est tracté.

L'activation du verrou d'immobilisation de la bascule facilite en outre le transport du semoir sur la route.

De préférence, le verrou est adapté pour autoriser une immobilisation de la bascule dans différentes positions angulaires autour de l'axe de bascule B. Dans un mode de réalisation, le verrou est constitué d'une vis qui coopère avec un filetage, la position d'immobilisation de la bascule variant avec le degré de vissage de la vis dans le filetage.

Par exemple, comme représenté sur les figures 9 et 12, le verrou peut comporter une vis 46 munie de deux écrous 47 et 48, qui traverse un trou oblong 50 ménagé dans une plaque 49 fixée, de préférence soudée à la bascule 24. La vis 46 peut venir se visser dans un filetage 51 ménagé dans un fer plat ou autre support solidaire de l'embase 22. De préférence, comme dans cet exemple, le soc 16 (ou un adaptateur sur lequel est fixé le soc) est fixé sur l'étançon 21 au moyen d'une fixation étrier 29 et le filetage 51 est de préférence ménagé dans une plaque 52 de la fixation étrier.

Ce vissage peut conduire ainsi à une immobilisation de la bascule relativement à l'embase. En vissant plus ou moins la vis, on peut modifier la distance entre l'embase et la bascule, et donc la position angulaire de la bascule immobilisée.

La vis 46 s'étend de préférence dans un plan longitudinal. Elle s'étend de préférence horizontalement dans la position de service.

Bien entendu, une vis pourrait alternativement être immobilisée sur l'embase, respectivement la bascule et venir se visser sur la bascule, respectivement l'embase.

Tous les verrous d'immobilisation de la bascule sont envisageables. Par exemple, une goupille traversant transversalement la bascule et l'embase est possible.

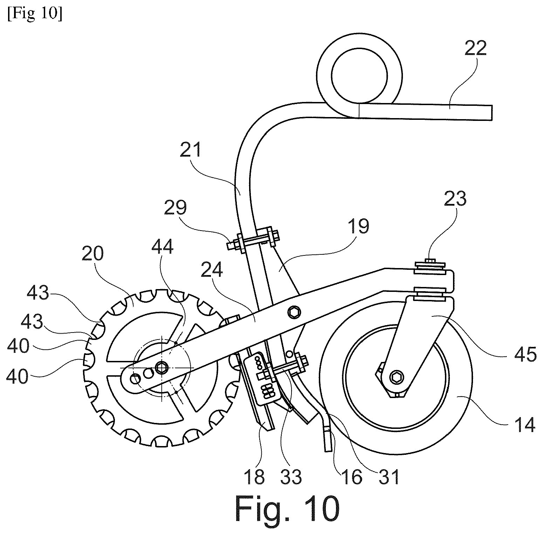

Dans le mode de réalisation de la figure 10, la solidarisation du soc (ou d'un adaptateur sur lequel et fixé le soc) sur l'étançon comporte une deuxième fixation étrier 33 similaire à la fixation étrier 29, pour la fixation en deux points du soc sur l'étançon, tout en permettant la mobilité en rotation de la bascule 24 par rapport à l'embase, la fixation étrier 29 étant au-dessus de l'axe B du pivot de la bascule et la fixation étrier 33 étant située en dessous de l'axe B, comme visible. Dans cet exemple, la bascule 24 comporte un adaptateur 19 qui porte le soc 16, la descente de semoir 18 et le pivot de la bascule d'axe B, l'adaptateur étant fixé à l'étançon 21 à l'aide des fixations étrier 29 et 33.

Dans un mode de réalisation, le semoir comporte une butée limitant la rotation de la bascule et sur laquelle la bascule prend appui, de préférence au moins lorsque ni le disque d'ouverture ni la roue de fermeture ne reposent sur le sol, par exemple lorsque le semoir est suspendu par l'étançon lors du transport du semoir sur la route. En particulier, dans cette position, le moment de force exercé par la roue de fermeture peut être supérieur à celui exercé par le disque d'ouverture, de sorte que le disque d'ouverture à tendance à se soulever. La butée est de préférence disposée de manière à limiter le soulèvement du disque d'ouverture.

De préférence, la butée est conformée de manière que, dans la position de butée, dans un plan longitudinal vertical, l'angle entre un plan horizontal et la droite (OF) qui relie les axes O et F soit inférieur à 60°, de préférence inférieure à 40°, de préférence inférieure à 20°, de préférence inférieure à 10°, voire sensiblement nul.

De préférence, la butée est réglable de manière à autoriser une modification de cet angle.

De préférence encore, la butée est désactivable.

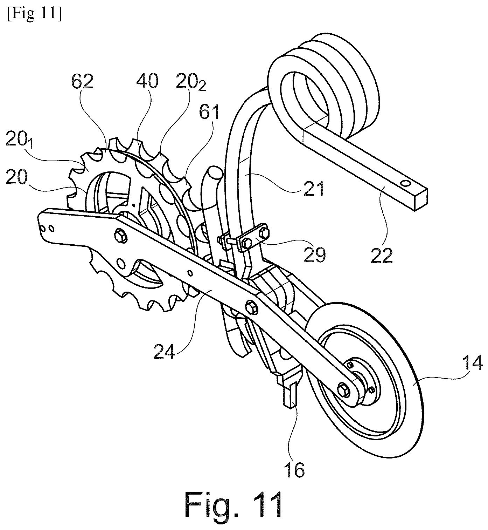

Dans les modes de réalisation des figures 9 et 11, la butée est obtenue par l'appui de la vis 46 du verrou d'immobilisation décrit ci-dessus sur le rebord de l'orifice fileté 51 dans lequel ladite vis 46 peut être vissée.

### Disque d'ouverture

Le disque d'ouverture 14 est de préférence de forme générale discoïdale afin d'assurer l'ouverture d'une fente continue. Dans un mode de réalisation, il s'étend dans un plan sensiblement vertical, ce qui facilite sa pénétration dans la terre.

Dans un mode de réalisation, son axe de rotation est incliné, par rapport à un plan horizontal, d'un angle supérieur à 3°, supérieur à 5°, supérieur à 6°, et/ou inférieur à 10°, de préférence inférieur à 9°, de préférence inférieur à 8°. La fente est ainsi inclinée. Les performances pour découper les végétaux sur le sol en sont améliorées.

Le disque d'ouverture 14 présente de préférence un diamètre supérieur à 10 cm, supérieur à 20 cm, supérieur à 25 cm, et/ou inférieur à 100 cm, inférieur à 70 cm, inférieur à 50 cm, à inférieur 40 cm ou inférieur à 35 cm, un diamètre de 30 cm étant préféré.

L'épaisseur du disque d'ouverture 14, mesurée à 10 mm de son bord périphérique, est de préférence inférieure à 20 mm, de préférence inférieure à 15 mm, de préférence inférieure à 10 mm, de préférence inférieure à 8 mm, voire inférieure à 5 mm, voire inférieure à 3 mm, voire inférieure à 2 mm, et/ou supérieure à 1 mm. De préférence encore, le bord périphérique du disque d'ouverture 14 est effilé.

Dans un mode de réalisation, le disque d'ouverture 14 porte une ou deux ceintures cylindriques coaxiales au disque d'ouverture 14 et conformées pour prendre appui à plat sur le sol et limiter l'enfoncement dans le sol.

Dans un autre mode de réalisation, le disque d'ouverture 14 porte un limiteur de profondeur, c'est-à-dire un dispositif qui limite mécaniquement l'enfoncement du disque d'ouverture dans le sol. Le limiteur de profondeur peut être par exemple constitué par une ou deux ceintures cylindriques coaxiales au disque d'ouverture 14, fixées sur chacune sur une grande face du disque d'ouverture, et conformée(s) pour prendre appui à plat sur le sol.

Dans un mode de réalisation, le disque d'ouverture 14 ne porte pas de limiteur de profondeur. La bascule peut en effet avantageusement assurer cette fonction.

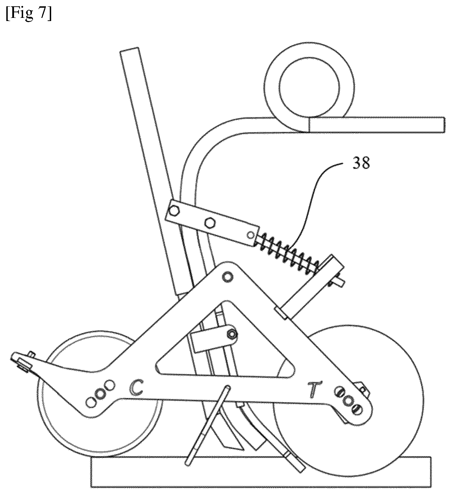

Dans un mode de réalisation, le disque d'ouverture 14 est monté sur une suspension 38 (figures 3 ou 7), par exemple comportant un vérin, notamment hydraulique ou pneumatique, par vis ou ressort. La suspension est de préférence conformée pour pousser élastiquement le disque d'ouverture 14 vers le sol.

Dans un mode de réalisation illustré sur la figure 10, le pivot du disque d'ouverture 14 est fixé sur une fourche 45 montée à rotation sur la bascule 24 autour d'un pivot 23 d'axe de préférence sensiblement vertical. Cela permet au disque d'ouverture 14 d'être mobile en rotation pour pouvoir suivre une trajectoire courbe, par exemple quand le tracteur tourne, sans forcer sur le disque d'ouverture 14 et la bascule 24.

De préférence, le pivot 23 ne s'étend pas dans un même plan transversal que le pivot du disque d'ouverture lorsque le disque d'ouverture s'étend dans le même plan que la roue de fermeture. Avantageusement, lorsque le semoir est tracté, le pivot du disque d'ouverture peut ainsi se placer derrière le pivot 23, comme illustré sur la figure 10, dans une position stable.

### Soc

Le soc 16 s'étend de préférence sensiblement verticalement.

De préférence, le soc présente la forme d'une plaque, dont la partie inférieure pénètre dans la fente en position de service. La largeur de la partie inférieure, mesurée transversalement, est de préférence supérieure à celle de la partie périphérique du disque d'ouverture utilisée pour ménager la fente. Cette largeur est de préférence supérieure à 5 mm, de préférence supérieure à 10 mm, de préférence supérieure à 12 mm, ou encore supérieure à 14 mm et/ou inférieure à 30 mm, de préférence inférieure à 25 mm, de préférence inférieure à 20 mm. Une telle largeur est bien adaptée au dépôt des graines.

Le soc 16 peut être fixé sur le support 12, de préférence sur l'embase 22 du support 12, par exemple à l'aide de vis de fixation 56 comme visible sur les figures 8 et 9 à une distance plus ou moins grande du sol. De préférence, le soc 16 s'étend, au moins partiellement, entre les deux plaques 24₁ et 24₂.

De préférence, le soc 16 est fixé de manière détachable sur le support. Avantageusement, le soc 16 peut être détaché du semoir sans avoir à détacher l'intégralité du support, ce qui permet la fixation de socs de formes variées au support.

Le soc 16 s'étend de préférence perpendiculairement au plan longitudinal médian. Il peut s'étendre verticalement ou être de préférence incliné vers l'arrière, formant un angle avec un plan transversal de préférence supérieur à 5°, à 10°, et/ou inférieur à 50°, à 30°.

Le soc 16 est de préférence renforcé par du carbure de tungstène.

Dans un mode de réalisation préféré, la distance d entre le soc 16 et le bord du disque d'ouverture est inférieure à 1 cm, de préférence inférieure à 5 mm. Le soc 16 peut ainsi avantageusement bloquer des végétaux pour qu'ils soient découpés par le disque d'ouverture (figure 4). Comme représenté sur la figure 4, la forme du soc 16 est de préférence déterminée pour que, sous l'effet de l'avancement du semoir, il guide les végétaux vers un rétreint 35 définissant une zone de rapprochement maximal du soc 16 avec le disque d'ouverture. Comme représenté sur la figure 4, le soc 16 est de préférence configuré pour former, avec le disque d'ouverture, une sorte d'entonnoir convergeant vers le rétreint 35.

Notamment dans le mode de réalisation de la figure 10, le disque d'ouverture 14 est de préférence monté de manière que la distance entre son bord périphérique et le soc soit inférieure à 2 cm, de préférence inférieure à 1 cm, voire inférieure à 0,5 cm, voire sensiblement nulle. Au point 31, le soc est ainsi en contact avec le soc 16. Avantageusement, cette proximité facilite la coupe de la matière végétale qui se présenterait en ce point 31. Le disque d'ouverture 14 peut bien entendu être réglé pour être plus éloigné du soc 16.

### Descente de semoir

La descente de semoir 18, qui présente de préférence la forme générale d'un tube, débouche par une ouverture supérieure et par une ouverture inférieure. L'ouverture supérieure est destinée à être mise en communication avec une source du composé à déposer, par exemple un réservoir de graines ou de produit phytosanitaire (non représenté), qui peut être notamment solidaire de l'engin de traction ou du support 12, de préférence de l'embase 22. L'ouverture inférieure est destinée à être disposée dans la fente ou au-dessus de la fente, de préférence élargie ou consolidée par le passage du soc 16.

Le diamètre équivalent de la descente de semoir est de préférence supérieur à 5 mm, de préférence supérieur à 8 mm, voire supérieur à 10 mm et/ou inférieur à 60 cm, de préférence inférieur à 50 mm, de préférence inférieur à 40 mm, à 30 mm, de préférence inférieur à 25 mm.

### Roue de fermeture

La roue de fermeture 20, de préférence sensiblement verticale, est destinée à fermer la fente élargie dans laquelle le composé a été déposé.

La roue de fermeture 20 est classiquement montée à rotation, de préférence libre, sur le support.

Dans un mode de réalisation, la roue de fermeture 20 est montée sur une suspension 39, par exemple comportant un vérin, notamment hydraulique ou pneumatique, par vis ou ressort (figure 5). La suspension est de préférence conformée pour presser élastiquement la roue de fermeture 20 sur le sol.

Dans un mode de réalisation, la roue de fermeture 20 n'est pas montée sur une suspension conformée pour la presser élastiquement la roue de fermeture 20 sur le sol. La bascule peut en effet avantageusement assurer cette fonction.

La roue de fermeture 20 présente de préférence un diamètre supérieur à 10 cm, de préférence supérieur à 20 cm, et/ou inférieur à 100 cm, inférieur à 70 cm, inférieur à 50 cm, à inférieur 35 cm ou inférieur à 30 cm, un diamètre de 25 cm étant préféré.

La largeur de la roue de fermeture 20, mesurée transversalement, est de préférence supérieure à 1 cm, de préférence supérieure à 2 cm, de préférence supérieure à 3 cm, de préférence encore supérieure à 4 cm, de préférence supérieure à 5 cm et/ou inférieure à 15 cm, de préférence inférieure à 10 cm, de préférence inférieure à 8 cm.

Dans les modes de réalisation des figures 8 à 11, la roue de fermeture 20 comporte deux roues crénelées 20₁ et 20₂ coaxiales fixées rigidement l'une à l'autre. La distance entre les deux roues crénelées 20₁ et 20₂ peut être inférieure à 2 cm, notamment inférieure à 1 cm. Chaque roue crénelée 20₁ ou 20₂ comporte des dents 40, dont le nombre est inférieur à 50, de préférence inférieur à 40, de préférence inférieur à 30, et/ou supérieur à 10, de préférence supérieur à 20.

Les dents 40 sont de préférence équi-angulairement réparties sur le pourtour de chaque roue crénelée.

Chaque dent 40 présente une section, dans un plan contenant l'axe de rotation de la roue de fermeture et le centre de la dent, de préférence de forme triangulaire.

Chaque dent 40 présente une face interne 61 et une face externe 62, de préférence sensiblement planes. Les faces internes 61, de préférence planes, s'étendent chacune dans un plan respectif formant avec un plan vertical un angle de préférence supérieur à 10°, notamment supérieur à 20°, voire à 30°, mieux à 40° et/ou inférieur à 90°, notamment inférieur à 80°, voire à 60°, notamment inférieur à 50°, par exemple un angle égal à 45° environ.

Chaque dent 40 présente de préférence une hauteur supérieure à 2 cm, notamment supérieure à 3 cm, voire supérieure à 4 cm et/ou inférieure à 10 cm, voire à 9 cm, notamment inférieure à 8 cm, voire inférieure à 7 cm.

La largeur des dents 40, à leur base, est de préférence supérieure à 1 cm, voire supérieure à 3 cm, notamment supérieure à 4 cm et/ou inférieure à 10 cm, voire inférieure à 9 cm, notamment inférieure à 7 cm, de préférence inférieure à 6 cm.

De préférence, les flancs 43 de deux dents 40 adjacentes se rejoignent de manière à ce qu'aucune arête entrante n'apparaisse.

Les sommets des dents d'une roue crénelée s'étendent de préférence suivant un contour, ou « ligne de crête », circulaire. La distance entre les lignes de crêtes des deux roues crénelées est de préférence inférieure à 10 cm, de préférence inférieure à 7 cm, voire inférieure à 6 cm, et/ou supérieure à 3 cm, de préférence supérieure à 4 cm.

Les deux roues crénelées 20₁ ou 20₂ sont de préférence constituées d'une jante annulaire crénelée et de rayons 44 qui relient la jante au palier de la roue.

### Fonctionnement

Le fonctionnement d'un semoir selon l'invention résulte directement de la description qui précède.

Le support est fixé à la poutre 13, qui elle-même est attachée à un tracteur, puis tiré sur le terrain à semer, selon la direction d'avancement.

L'appui de la roue de fermeture 20 sur le sol provoque une réaction du sol dont le moment, autour de l'axe B, tend à enfoncer le disque d'ouverture 14 dans le sol. Un simple réglage de la distance verticale entre l'axe B et l'axe O et/ou de la distance verticale entre l'axe B et l'axe F permet de définir une profondeur d'enfoncement minimale.

Grâce à la bascule 24, les poids de l'ensemble d'ouverture et de l'ensemble de fermeture 20 exercent des moments de force, autour de l'axe B, qui sont antagonistes. Le moment résultant du poids de l'ensemble d'ouverture s'oppose ainsi à l'enfoncement du disque d'ouverture dans le sol.

Dans un mode de réalisation, au moins un de ces moments de force est modifiable, de préférence
- par modification du bras de levier correspondant, c'est-à-dire modification de la distance longitudinale entre les axes B et F et/ou de la distance longitudinale entre les axes B et O, et/ou
- par modification de la masse de l'ensemble d'ouverture et/ou de l'ensemble de fermeture, de préférence par modification de la masse du disque d'ouverture et/ou de la masse de la roue de fermeture, respectivement, et/ou de la masse de la branche de disque d'ouverture et/ou de la masse de la branche de roue de fermeture.

L'invention concerne ainsi également un kit comportant un semoir selon l'invention et une ou plusieurs masses amovibles 42 pouvant être fixées sur le disque d'ouverture et/ou la roue de fermeture et/ou la bascule, en particulier la branche de disque d'ouverture et/ou la branche de roue de fermeture et/ou la branche de rigidification, comme représenté sur la figure 6.

Avantageusement, ces simples modifications permettent d'ajuster la pression de pénétration du disque d'ouverture dans le sol, et donc de définir une profondeur d'enfoncement maximale.

Il est ainsi possible de facilement adapter la profondeur de la fente au composé à semer et/ou de s'adapter à la nature du sol.

De préférence, lesdits moments antagonistes sont tous les deux élevés, ce qui assure une très bonne stabilité.

Lors de son avancement, le disque d'ouverture 14 crée une fente étroite. Le disque d'ouverture 14 agit à la manière d'une roulette à pizzas. Avantageusement, la terre n'a pas besoin d'être préparée.

Cependant, lorsque que le disque d'ouverture 14 entre en contact avec des végétaux jonchant le sol, ces végétaux ont tendance à faire sortir le disque d'ouverture du sol. Cette action des végétaux se traduit par une augmentation de la réaction du sol sur la roue de fermeture 20, qui elle-même se répercute par une augmentation de la pression de pénétration du disque d'ouverture. L'efficacité pour découper ces végétaux en est considérablement accrue. En outre, le disque d'ouverture peut adapter instantanément l'action de découpage qu'il exerce sur les végétaux, sans intervention humaine.

Le soc 16, logé dans la fente, présente de préférence une épaisseur supérieure à la largeur de la fente. Il contribue donc à l'élargir et à la consolider, ce qui facilite le dépôt des composés au fond de la fente. Les composés, par exemple des graines, sont alors progressivement semés dans la fente élargie, par l'intermédiaire de la descente de semoir 18.

Après qu'une graine a été déposée dans la fente, la fente est au moins partiellement comblée avec la roue de fermeture 20, qui vient rouler sur la fente.

La bascule, formant un ensemble rigide, assure un bon alignement du disque d'ouverture et de la roue de fermeture, ce qui permet à la roue de fermeture de rouler précisément sur la fente.

Comme cela apparaît clairement à présent, un semoir selon l'invention permet de contrôler la profondeur du disque d'ouverture, sans avoir à recourir à des moyens complexes et coûteux.

Bien entendu, l'invention n'est pas limitée aux modes de réalisation décrits et représentés, fournis à des fins illustratives seulement.

En particulier, les formes de la bascule et des branches de disque d'ouverture, de roue de fermeture, et optionnellement de rigidification, peuvent être différentes de celles décrite ci-dessus.

## Revendications

1. Semoir comportant un support (12) destiné, dans une position de service, à être tracté par un engin agricole selon une direction d'avancement (A), le semoir comportant :
- un disque d'ouverture (14) monté à rotation, sur le support, autour d'un pivot de disque d'ouverture d'axe O, de manière à ménager une fente dans le sol ;
- une descente de semoir (18) rigidement fixée sur le support et configurée pour, en position de service, déposer un composé dans la fente ;
- une roue de fermeture (20) montée à rotation, sur le support, autour d'un pivot de roue de fermeture d'axe F, de manière à fermer, au moins partiellement, la fente dans laquelle le composé a été déposé,
le disque d'ouverture (14), la descente de semoir (18) et la roue de fermeture (20) étant successivement montés, depuis l'avant vers l'arrière, sur le support (12),
le support comportant
- une embase de fixation (22) à l'engin agricole,
- un soc (16), disposé entre le disque d'ouverture (14) et la descente de semoir (18),
le support comportant une bascule (24) montée à rotation sur l'embase (22) autour d'un pivot de bascule d'axe B, la bascule portant respectivement les pivots de disque d'ouverture et de roue de fermeture, de sorte que, en position de service, si le disque d'ouverture ou la roue de fermeture se soulève, la réaction du sol sur la roue de fermeture ou le disque d'ouverture, respectivement, tend à ramener le disque d'ouverture ou la roue de fermeture, respectivement, vers le sol,
les axes O, F et B s'étendant dans des plans transversaux respectifs perpendiculaires à la direction d'avancement (A) du semoir,
le plan transversal P dans lequel s'étend l'axe B séparant le pivot de disque d'ouverture et le pivot de roue de fermeture,
le semoir étant **caractérisé en ce que** la descente de semoir (18) et/ou le soc (16) est/sont fixé(e)(s) rigidement sur l'embase (22).

2. Semoir selon la revendication immédiatement précédente, dans lequel la distance entre le soc (16) et le bord périphérique du disque d'ouverture est inférieure à 1 cm, de préférence inférieure à 5 mm.

3. Semoir selon l'une quelconque des revendications précédentes, dans lequel, dans un plan longitudinal vertical, l'angle θ entre la droite (BO) qui relie les axes B et O et la droite (BF) qui relie les axes B et F est inférieur à 60°.

4. Semoir selon la revendication immédiatement précédente, dans lequel l'angle θ est inférieur à 30°.

5. Semoir selon l'une quelconque des revendications précédentes, comportant un verrou d'immobilisation de la bascule par rapport à l'embase, le verrou d'immobilisation étant de préférence réglable de manière à définir une pluralité de positions dans lesquelles la bascule est bloquée en position par rapport à l'embase.

6. Semoir selon l'une quelconque des revendications précédentes, comportant une butée, de préférence réglable, disposée de manière à limiter le soulèvement du disque d'ouverture par rotation de la bascule.

7. Semoir selon l'une quelconque des revendications précédentes, dans lequel le moment de force, autour de l'axe B, du disque d'ouverture (14) et/ou le moment de force, autour de l'axe B, de la roue de fermeture (20) est/sont réglable(s).

8. Semoir selon la revendication immédiatement précédente, dans lequel
- la distance entre
- le pivot de bascule d'une part, et
- le pivot de disque d'ouverture ou le pivot de roue de fermeture, respectivement, d'autre part, et/ou
- l'angle, mesuré dans un plan longitudinal vertical, d'inclinaison (λ, δ) par rapport à un plan horizontal, de la droite (BO) qui relie les axes B et O, et/ou de la droite (BF) qui relie les axes B et F,
est/sont réglables.

9. Semoir selon l'une quelconque des revendications précédentes, dans lequel la bascule (24) comporte :
- un trou oblong (34') dans lequel le pivot de disque d'ouverture peut être fixé rigidement en différentes positions et/ou une pluralité de trous cylindriques (34) dans chacun desquels le pivot de disque d'ouverture peut être fixé rigidement, et/ou
- un trou oblong (36') dans lequel le pivot de roue de fermeture peut être fixé rigidement en différentes positions et/ou une pluralité de trous cylindriques (34') dans chacun desquels le pivot de roue de fermeture peut être fixé rigidement.

10. Semoir selon l'une quelconque des revendications précédentes, dans lequel, dans un plan longitudinal vertical,
- l'angle d'inclinaison λ entre la droite (BO) qui relie les axes B et O et un plan horizontal, est supérieur à 30° et inférieur à 70°, et/ou
- l'angle d'inclinaison δ entre la droite (BF) qui relie les axes B et F et un plan horizontal, est supérieur à 10° et inférieur à 50°, et/ou
- la distance entre l'axe B et l'axe O est supérieure à 10 cm, et inférieure à 80 cm, et/ou
- la distance entre l'axe B et l'axe F est supérieure à 25 cm et inférieure à 80 cm, et/ou
- la distance longitudinale entre l'axe B et l'axe O, est supérieure à 5 cm et inférieure à 80 cm, et/ou
- la distance longitudinale entre l'axe B et l'axe F est supérieure à 15 cm et inférieure à 100 cm, et/ou
- la distance verticale entre l'axe B et l'axe O est supérieure à 10 cm et inférieure à 50 cm, et/ou
- la distance verticale entre l'axe B et l'axe F est supérieure à 10 cm et/ou inférieure à 50 cm.

11. Semoir selon l'une quelconque des revendications précédentes, dans lequel la bascule présente la forme générale de deux pièces (24₁,24₂) plates sensiblement verticales, reliées entre elles par les pivots de disque d'ouverture, de roue de fermeture et de bascule.

12. Semoir selon l'une quelconque des revendications précédentes, dans lequel la roue de fermeture (20) comporte deux roues crénelées (20₁, 20₂) coaxiales fixées entre elles, chaque roue crénelée comportant une pluralité de dents (40) sur son pourtour, les dents de l'une des roues crénelées étant de préférence disposées en quinconce relativement aux dents de l'autre des roues crénelées.

13. Semoir selon l'une quelconque des revendications précédentes, dans lequel le pivot du disque d'ouverture (14) est fixé sur une fourche (45) montée à rotation sur la bascule autour d'un axe (23), de préférence sensiblement vertical.

## Patentansprüche

1. Sämaschine, umfassend ein Gestell (12), das dazu bestimmt ist, in einer Betriebsposition von einer landwirtschaftlichen Maschine entlang einer Fahrtrichtung (A) gezogen werden, die Sämaschine umfassend:
- eine Öffnungsscheibe (14), die an dem Gestell um einen Öffnungsscheibenzapfen mit der Achse O drehbar montiert ist, so dass sie eine Furche in dem Boden bildet;
- ein Säfallrohr (18), das starr an dem Gestell befestigt ist und dazu ausgestaltet ist, in der Betriebsposition eine Zusammensetzung in der Furche abzulegen;
- ein Schließrad (20), das an dem Gestell um einen Schließradzapfen mit der Achse F drehbar montiert ist, so dass es die Furche, in der die Zusammensetzung abgelegt wurde, mindestens teilweise schließt,
wobei die Öffnungsscheibe (14), das Säfallrohr (18) und das Schließrad (20) hintereinander, von vorn nach hinten, an dem Gestell (12) montiert sind,
das Gestell umfassend
- eine Befestigungsbasis (22) zur Befestigung an der landwirtschaftlichen Maschine,
- ein Sech (16), das zwischen der Öffnungsscheibe (14) und dem Säfallohr (18) angeordnet ist, wobei das Gestell eine Schwinge (24) umfasst, die an der Basis (22) um einen Schwingenzapfen mit der Achse B drehbar montiert ist, wobei die Schwinge die Öffnungsscheibenbeziehungsweise Schließradzapfen trägt, so dass in der Betriebsposition, wenn die Öffnungsscheibe oder das Schließrad angehoben wird, die Reaktion des Bodens auf das Schließrad beziehungsweise die Öffnungsscheibe bestrebt ist, die Öffnungsscheibe beziehungsweise das Schließrad zu dem Boden hin zurückzuführen, wobei sich die Achsen O, F und B in jeweiligen Querebenen erstrecken, die senkrecht zu der Fahrtrichtung (A) der Sämaschine verlaufen,
wobei die Querebene P, in der sich die Achse B erstreckt, den Öffnungsscheibenzapfen und den Schließradzapfen trennt,
wobei die Sämaschine **dadurch gekennzeichnet ist, dass** das Säfallrohr (18) und/oder das Sech (16) starr an der Basis (22) befestigt ist/sind.

2. Sämaschine nach dem unmittelbar vorhergehenden Anspruch, wobei der Abstand zwischen dem Sech (16) und dem Umfangsrand der Öffnungsscheibe kleiner als 1 cm, bevorzugt kleiner als 5 mm ist.

3. Sämaschine nach einem der vorhergehenden Ansprüche, wobei, in einer vertikalen Längsebene, der Winkel Θ zwischen der Geraden (BO), welche die Achsen B und O verbindet, und der Geraden (BF), welche die Achsen B und F verbindet, kleiner als 60° ist.

4. Sämaschine nach dem unmittelbar vorhergehenden Anspruch, wobei der Winkel Θ kleiner als 30° ist.

5. Sämaschine, nach einem der vorhergehenden Ansprüche, umfassend einen Feststellriegel zum Feststellen der Schwinge in Bezug auf die Basis, wobei der Feststellriegel bevorzugt verstellbar ist, so dass eine Mehrzahl von Positionen definiert wird, in denen die Schwinge in Bezug auf die Basis in der Position blockiert ist.

6. Sämaschine nach einem der vorhergehenden Ansprüche, umfassend einen, bevorzugt verstellbaren, Anschlag, der so angeordnet ist, dass er das Anheben der Öffnungsscheibe durch Drehen der Schwinge begrenzt.

7. Sämaschine nach einem der vorhergehenden Ansprüche, wobei das Kraftmoment, um die Achse B, der Öffnungsscheibe (14) und/oder das Kraftmoment, um die Achse B, des Schließrads (20) verstellbar ist/sind.

8. Sämaschine nach dem unmittelbar vorhergehenden Anspruch, wobei
- der Abstand zwischen
- dem Schwingendrehzapfen zum einen, und
- dem Öffnungsscheibenzapfen beziehungsweise dem Schließradzapfen zum anderen, und/oder
- der in einer vertikalen Längsebene gemessene Neigungswinkel (λ, δ) in Bezug auf eine horizontale Ebene der Geraden (BO), welche die Achsen B und O verbindet, und/oder der Geraden (BF), welche die Achsen B und F verbindet,
verstellbar ist/sind.

9. Sämaschine nach einem der vorhergehenden Ansprüche, wobei die Schwinge (24) umfasst:
- ein Langloch (34'), in dem der Öffnungsscheibenzapfen starr in verschiedenen Positionen befestigt werden kann, und/oder eine Mehrzahl von zylindrischen Löchern (34), in denen jeweils der Öffnungsscheibenzapfen starr befestigt werden kann, und/oder
- ein Langloch (36'), in dem der Schließradzapfen starr in verschiedenen Positionen befestigt werden kann, und/oder eine Mehrzahl von zylindrischen Löchern (34'), in denen jeweils der Schließradzapfen starr befestigt werden kann.

10. Sämaschine nach einem der vorhergehenden Ansprüche, wobei, in einer vertikalen Längsebene,
- der Neigungswinkel λ zwischen der Geraden (BO), welche die Achsen B und O verbindet, und einer horizontalen Ebene größer als 30° und kleiner als 70° ist, und/oder
- der Neigungswinkel δ zwischen der Geraden (BF), welche die Achsen B und F verbindet, und einer horizontalen Ebene größer als 10° und kleiner als 50° ist, und/oder
- der Abstand zwischen der Achse B und der Achse O größer als 10 cm und kleiner als 80 cm ist, und/oder
- der Abstand zwischen der Achse B und der Achse F größer als 25 cm und kleiner als 80 cm ist, und/oder
- der Längsabstand zwischen der Achse B und der Achse O größer als 5 cm und kleiner als 80 cm ist, und/oder
- der Längsabstand zwischen der Achse B und der Achse F größer als 15 cm und kleiner als 100 cm ist, und/oder
- der vertikale Abstand zwischen der Achse B und der Achse O größer als 10 cm und kleiner als 50 cm ist, und/oder
- der vertikale Abstand zwischen der Achse B und der Achse F größer als 10 cm und kleiner als 50 cm ist.

11. Sämaschine nach einem der vorhergehenden Ansprüche, wobei die Schwinge die Grundform von zwei im Wesentlichen vertikalen flachen Teilen (24₁,24₂) aufweist, die untereinander durch die Öffnungsscheiben-, Schließrad- und Schwingenzapfen verbunden sind.

12. Sämaschine nach einem der vorhergehenden Ansprüche, wobei das Schließrad (20) zwei untereinander befestigte koaxiale gezahnte Räder (20₁, 20₂) umfasst, wobei jedes gezahnte Rad eine Mehrzahl von Zähnen (40) an seinem Umfang umfasst, wobei die Zähne des einen der gezahnten Räder bevorzugt versetzt zu den Zähnen des anderen der gezahnten Räder angeordnet sind.

13. Sämaschine nach einem der vorhergehenden Ansprüche, wobei der Zapfen der Öffnungsscheibe (14) an einer Gabel (45) befestigt ist, die an der Schwinge um eine, bevorzugt im Wesentlichen vertikale, Achse (23) drehbar montiert ist.

## Claims

1. Seeder having a support (12) intended, in a service position, to be drawn by an agricultural vehicle in a direction of forward travel (A), the seeder having:
- an opening disc (14) mounted to rotate, on the support, about an opening disc pivot of axis O, so as to create a furrow in the ground;
- a seed dropper (18) rigidly fastened to the support and configured to, in the service position, deposit a compound in the furrow;
- a closing wheel (20) mounted to rotate, on the support, about a closing wheel pivot of axis F, so as to close, at least partially, the furrow in which the compound has been deposited,
the opening disc (14), the seed dropper (18) and the closing wheel (20) being successively mounted, from the front towards the rear, on the support (12),
the support having
- a base (22) for fastening to the agricultural vehicle,
- a share (16), disposed between the opening disc (14) and the seed dropper (18), the support having a rocker (24) mounted to rotate on the base (22) about a rocker pivot of axis B, the rocker bearing respectively the opening disc pivot and closing wheel pivot, such that, in the service position, if the opening disc or the closing wheel lifts, the reaction of the ground on the closing wheel or the opening disc, respectively, tends to return the opening disc or the closing wheel, respectively, towards the ground, the axes O, F and B extending in respective transverse planes perpendicular to the direction of forward travel (A) of the seeder,
the transverse plane P in which the axis B extends separating the opening disc pivot and the closing wheel pivot,
the seeder being **characterized in that** the seed dropper (18) and/or the share (16) is/are fastened rigidly to the base (22).

2. Seeder according to the immediately preceding claim, wherein the distance between the share (16) and the peripheral edge of the opening disc is less than 1 cm, preferably less than 5 mm.

3. Seeder according to either one of the preceding claims, wherein, in a vertical longitudinal plane, the angle Θ between the straight line (BO) that connects the axes B and O and the straight line (BF) that connects the axes B and F is less than 60°.

4. Seeder according to the immediately preceding claim, wherein the angle Θ is less than 30°.

5. Seeder according to any one of the preceding claims, having a latch for immobilizing the rocker with respect to the base, the immobilizing latch preferably being adjustable so as to define a plurality of positions in which the rocker is blocked in position with respect to the base.

6. Seeder according to any one of the preceding claims, comprising a stop, which is preferably adjustable, disposed so as to limit the lifting of the opening disc by rotation of the rocker.

7. Seeder according to any one of the preceding claims, wherein the moment of force, about the axis B, of the opening disc (14) and/or the moment of force, about the axis B, of the closing wheel (20) is/are adjustable.

8. Seeder according to the immediately preceding claim, wherein
- the distance between
- the rocker pivot on the one hand, and
- the opening disc pivot or the closing wheel pivot, respectively, on the other hand, and/or
- the angle, measured in a vertical longitudinal plane, of inclination (λ, δ) with respect to a horizontal plane, of the straight line (BO) that connects the axes B and O, and/or of the straight line (BF) that connects the axes B and F,
is/are adjustable.

9. Seeder according to any one of the preceding claims, wherein the rocker (24) has:
- an oblong hole (34') in which the opening disc pivot can be fastened rigidly in various positions and/or a plurality of cylindrical holes (34) in each of which the opening disc pivot can be fastened rigidly, and/or
- an oblong hole (36') in which the closing wheel pivot can be fastened rigidly in various positions and/or a plurality of cylindrical holes (34') in each of which the closing wheel pivot can be fastened rigidly.

10. Seeder according to any one of the preceding claims, wherein, in a vertical longitudinal plane,
- the angle of inclination λ between the straight line (BO) that connects the axes B and O and a horizontal plane is greater than 30° and less than 70°, and/or
- the angle of inclination δ between the straight line (BF) that connects the axes B and F and a horizontal plane is greater than 10° and less than 50°, and/or
- the distance between the axis B and the axis O is greater than 10 cm and less than 80 cm, and/or
- the distance between the axis B and the axis F is greater than 25 cm and less than 80 cm, and/or
- the longitudinal distance between the axis B and the axis O is greater than 5 cm and less than 80 cm, and/or
- the longitudinal distance between the axis B and the axis F is greater than 15 cm and less than 100 cm, and/or
- the vertical distance between the axis B and the axis O is greater than 10 cm and less than 50 cm, and/or
- the vertical distance between the axis B and the axis F is greater than 10 cm and/or less than 50 cm.

11. Seeder according to any one of the preceding claims, wherein the rocker has the overall shape of two substantially vertical flat pieces (24₁, 24₂), which are connected to each other by the opening disc pivot, closing wheel pivot and rocker pivot.

12. Seeder according to any one of the preceding claims, wherein the closing wheel (20) has two coaxial crenellated wheels (20₁, 20₂) that are fastened to each other, each crenellated wheel having a plurality of teeth (40) on its perimeter, the teeth of one of the crenellated wheels preferably being disposed staggered relative to the teeth of the other of the crenellated wheels.

13. Seeder according to any one of the preceding claims, wherein the pivot of the opening disc (14) is fastened to a yoke (45) mounted to rotate on the rocker about an axis (23), which is preferably substantially vertical.
